(19) **Europäisches Patentamt / European Patent Office / Office européen des brevets**

(11) **EP 3 728 427 B1**

(12) **FASCICULE DE BREVET EUROPEEN**

(45) Date de publication et mention
de la délivrance du brevet:
**24.11.2021 Bulletin 2021/47**

(21) Numéro de dépôt: **18836838.5**

(22) Date de dépôt: **17.12.2018**

(51) Int Cl.:
*C08J 9/02* *(2006.01)*     *C08J 9/30* *(2006.01)*
*C08L 67/02* *(2006.01)*     *C08J 9/00* *(2006.01)*

(86) Numéro de dépôt international:
**PCT/FR2018/053349**

(87) Numéro de publication internationale:
**WO 2019/122667 (27.06.2019 Gazette 2019/26)**

(54) **PROCEDE DE FABRICATION DE MOUSSES POLYESTER THERMODURCIES AVEC ETAPE DE PREOLIGOMERISATION**

VERFAHREN ZUR HERSTELLUNG VON DUROPLAST-POLYESTERSCHÄUMEN MIT VOROLIGOMERISATIONSSTUFE

METHOD FOR PRODUCING THERMOSET POLYESTER FOAMS WITH PRE-OLIGOMERIZATION STEP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2017 FR 1762334**

(43) Date de publication de la demande:
**28.10.2020 Bulletin 2020/44**

(73) Titulaire: **SAINT-GOBAIN ISOVER**
**92400 Courbevoie (FR)**

(72) Inventeurs:
• **SALOMON, Pierre**
**92400 Courbevoie (FR)**
• **SAVONNET, Marie**
**75018 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A1- 2 628 757     WO-A1-2010/059925**
**WO-A1-2016/207517**

**Description**

La présente invention concerne un procédé de fabrication de mousses polyester biosourcées comprenant une étape de préoligomérisation des réactifs biosourcés, suivie d'une étape d'expansion et de durcissement de la composition de réactifs biosourcés préoligomérisés.

Il est connu de préparer des mousses thermodurcies, majoritairement biosourcées, à partir de sucres ou d'alcools de sucres et/ou d'acides biosourcées.

La demande internationale WO2016/139401 décrit ainsi la production de mousses à partir de sucres réducteurs et d'amines.

La demande EP 2628757 décrit la formation de mousses polyester thermodurcies par réaction de glycérol et d'acide citrique en présence d'acide fort au contact d'une surface métallique.

La demande internationale WO2016/174328 décrit la fabrication de mousses thermodurcies à partir de saccharides et de catalyseurs acides.

La demande française FR 3060009 au nom de la Demanderesse divulgue la préparation de mousses par expansion et durcissement de compositions à base de diacides carboxyliques $\alpha$-hydroxylés porogènes, en particulier d'acide tartrique.

La demande internationale WO2016/207517 décrit un procédé de fabrication de mousses polyester par réaction d'un composant polyol comprenant du glycérol, avec un composant polyacide comprenant de l'acide citrique, en présence d'un catalyseur. Dans ce système réactionnel l'acide citrique joue à la fois le rôle de réactif polyfonctionnel participant à la formation du réseau polymérique tridimensionnel et le rôle d'agent d'expansion libérant du dioxyde de carbone lorsque la température réactionnel approche la température de dégradation thermique de l'acide citrique.

Dans toutes ces demandes, la réaction de polymérisation et l'expansion (moussage) du mélange réactionnel sont décrites comme ayant lieu simultanément pendant l'unique étape de chauffage. La qualité des mousses obtenues, c'est-à-dire la finesse et l'uniformité des pores, la faible masse volumique et les bonnes propriétés mécaniques, dépend en effet dans une très large mesure de la simultanéité de la réaction de polymérisation et de la formation de l'agent d'expansion. Si l'agent d'expansion est généré dans un mélange réactionnel trop liquide il s'échappera vers l'atmosphère avant que l'augmentation de la viscosité du mélange réactionnel soit suffisante pour le retenir. Si la réaction de polymérisation est précoce, le mélange réactionnel sera excessivement visqueux lorsque l'agent d'expansion gazeux commencera à se former et les bulles seront grosses et irrégulières.

La demande internationale WO2010/059925 décrit un procédé de préparation de mousse polyester comprenant une étape de préoligomérisation du sucre et du polyacide porogène.

Le but de la présente invention est de proposer, pour un système réactionnel à base d'acide citrique et de polyols biosourcés, un procédé de fabrication de mousses polyester permettant une bonne maîtrise de l'évolution de la viscosité du mélange réactionnel indépendamment de la formation de l'agent d'expansion, puis le déclenchement de la libération de l'agent d'expansion ($CO_2$) lorsque la viscosité du système réactionnel est optimale, c'est-à-dire ni trop faible ni trop importante.

Ce but a été atteint grâce à un procédé de fabrication de mousses polyester comprenant deux étapes de chauffage distinctes, mises en œuvre à des températures différentes, à savoir :

- une première étape de chauffage du mélange réactionnel contenant l'ensemble des réactifs, à une température suffisante pour débuter la polymérisation des réactifs mais significativement inférieure à la température de formation de l'agent d'expansion, puis
- une deuxième étape de chauffage du mélange réactionnel prépolymérisé obtenu, jusqu'à une température proche de la température de formation de l'agent d'expansion.

La première étape de chauffage est mise en œuvre de préférence sous agitation mécanique, tandis que la deuxième étape de chauffage est mise en œuvre en absence d'agitation.

A l'issue de la première étape de chauffage, la composition réactionnelle chaude est toujours liquide mais plus visqueuse que le mélange réactionnel de départ. Cette première composition réactionnelle liquide - également appelée parfois ci-après « mélange d'oligomères » - contient des oligomères formés par estérification des polyols avec le polyacide porogène et avec d'autres acides éventuellement présents. Elle est essentiellement anhydre, c'est-à-dire elle contient uniquement l'eau liée aux réactifs de départ ou l'eau formée par la réaction de condensation entre les fonctions acides et les fonctions hydroxyle et non encore évaporée.

Les agents tensioactifs, nécessaires à la formation d'une mousse fine de bonne qualité, sont de préférence ajoutés à cette première composition liquide prépolymérisée, après la première étape de chauffage et avant la deuxième étape de chauffage. On pourrait en principe les ajouter au mélange réactionnel de départ, mais cela ne représente pas un mode de réalisation préféré.

L'acide citrique est le polyacide porogène préféré. Il joue le rôle d'agent d'expansion chimique libérant, par décomposition thermique, du dioxyde de carbone ($CO_2$). La première étape de chauffage doit donc être mise en œuvre à une température significativement inférieure à la température de décomposition chimique de l'acide citrique (170 °C) tandis que la deuxième étape de chauffage doit être mise en œuvre à une température proche de cette température de décomposition thermique de l'acide citrique ou supérieure à celle-ci.

La présente invention a donc pour objet un procédé de fabrication d'une mousse polyester thermodurcie, comprenant les étapes successives suivantes :

(a) chauffage d'une composition de préoligomérisation essentiellement anhydre, contenant

- un composant polyol comprenant au moins 30 % en poids de sucre hydrogéné choisi parmi les sucres hydrogénés de formule $C_nH_{2n+2}O_n$ où n vaut 4, 5, ou 6, et les produits d'hydrogénation d'hydrolysats d'amidon,
- un composant polyacide comprenant un polyacide porogène choisi de préférence parmi l'acide citrique et les acides dicarboxyliques $\alpha$-hydroxylés de formule (I) HOOC-(CHR$^1$)$_n$-CHOH-COOH où
  n est un entier allant de 1 - 4, de préférence de 1 - 3, en particulier 1 ou 2, et de manière tout particulièrement préférée 1, et
  chaque R$^1$ représente indépendamment un atome d'hydrogène, un groupe hydroxyle (-OH) ou un groupe alkyle, de préférence un groupe alkyle en $C_{1-4}$, et
- un catalyseur,

ladite composition de préoligomérisation contenant moins de 1 % en poids, de préférence moins de 0,1 % en poids, de glycérol,
à une température comprise entre 100 °C et moins de 160 °C pendant une durée comprise entre 10 et 60 minutes, de préférence entre 15 et 40 minutes, sous agitation mécanique, de manière à faire réagir le composant polyol avec le composant polyacide et à former une composition d'esters oligomères, également appelée ci-après mélange d'oligomères,
(b) incorporation d'une composition d'agent tensioactif dans la composition d'esters oligomères, de manière à obtenir une composition expansible thermodurcissable,
(c) introduction de la composition expansible thermodurcissable obtenue dans un moule ou application de la composition expansible thermodurcissable sur un support,
(d) chauffage de la composition expansible thermodurcissable, en l'absence d'agitation mécanique, à une température au moins égale à 160 °C, de préférence comprise entre 165 °C et 185 °C, pendant une durée comprise entre 10 minutes et 8 heures, de préférence entre 20 minutes et 7 heures et en particulier entre 30 minutes et 6 heures, de manière à former une mousse polyester thermodurcie.

La première étape (étape (a)) du procédé de l'invention est une étape d'oligomérisation des réactifs, c'est-à-dire une étape de condensation partielle des groupes acides du composant polyacide et des groupes hydroxyle du composant polyol, en présence d'un catalyseur. Le mélange réactionnel comprenant le composant polyol, le composant polyacide et le catalyseur est préparé par mélange physique des trois ingrédients, éventuellement préchauffés séparément.

Dans un mode de réalisation préféré, le composant polyol peut être liquéfié par chauffage, puis on ajoute au polyol liquide le composant polyacide et, en dernier, le catalyseur. L'agitation du mélange réactionnel commence au plus tard au moment de l'ajout du dernier composant, qui est généralement le catalyseur.

Le mélange réactionnel de départ comprend donc trois composants essentiels, à savoir le composant polyol contenant un sucre hydrogéné, le composant polyacide contenant un polyacide porogène, de préférence l'acide citrique, et le catalyseur d'estérification.

A la fin de l'étape d'oligomérisation un quatrième composant essentiel est ajouté au mélange d'oligomères. Ce quatrième composant essentiel est un agent tensioactif. Il est indispensable à la formation de mousses fines de bonne qualité.

Le composant polyacide peut comprendre des polyacides différents de l'acide citrique et des acides dicarboxyliques $\alpha$-hydroxylés et le composant polyol peut comprendre des polyols, c'est-à-dire des composés polyhydroxylés, différents d'un sucre hydrogéné. Des exemples d'autres polyacides et d'autres polyols seront donnés ci-après.

Dans la présente demande, les quantités ou teneurs en composants polyol ou polyacide s'entendent toujours pour l'ensemble des polyols ou pour l'ensemble des polyacides présents dans la composition.

Cette définition des composants polyols et polyacides n'exclut pas la possibilité que certains agents tensioactifs soient considérés comme faisant partie des composants polyols ou polyacides. C'est le cas par exemple des alkylpolyglycosides (APG) qui font partie des agents tensioactifs préférés. Les alkylpolyglycosides comportent un ou plusieurs motifs de sucres (motifs polyhydroxylés) et jouent à la fois le rôle d'agent tensioactif en modulant et contrôlant la porosité des mousses obtenues, et le rôle de polyols susceptibles de participer à la formation d'un réseau tridimensionnel durci par réaction avec les groupes acide du composant polyacide.

Dans la présente invention lorsqu'un composé, présent dans la composition expansible thermodurcissable, peut être considéré à la fois comme un premier des quatre composants essentiels *et* comme un deuxième des quatre composants essentiels de la composition (composant polyol, composant polyacide, agent tensioactif, catalyseur d'estérification) il sera considéré à la fois comme l'un et comme l'autre. Cela implique qu'il sera pris en compte dans les quantités de chacun de ces deux composants.

Ainsi, une composition expansible et thermodurcissable contenant

48 % en poids de sorbitol,
47 % en poids d'acide citrique,
3 % en poids d'alkylpolyglycosides et
2 % en poids d'un catalyseur d'estérification

aura une teneur en composant polyol égale à 51 % (48 % sorbitol + 3 % d'alkylpolyglycoside), une teneur en composant polyacide égale à 47 %, une teneur en agent tensioactif égale à 3 % et une teneur en catalyseur d'estérification égale à 2 %. La somme numérique de ces quatre composants est alors bien entendu supérieure à 100 % car les 3 % d'alkylpolyglycosides sont comptabilisés doublement.

Le premier composant essentiel de la composition expansible thermodurcissable est le composant polyol. Ce composant comprend au moins 30% en poids de sucre hydrogéné choisi parmi les sucres hydrogénés de formule $C_nH_{2n+2}O_n$ où n vaut 4, 5, ou 6, et les produits d'hydrogénation d'hydrolysats d'amidon,

Par « sucre hydrogéné » on entend l'ensemble des produits résultant de la réduction d'un saccharide (hydrate de carbone) choisi parmi les monosaccharides, disaccharides et oligosaccharides et des mélanges de ces produits. Les sucres hydrogénés sont également appelés alcools de sucres, alditols ou polyols. Ils peuvent être obtenus par hydrogénation catalytique de saccharides. L'hydrogénation peut être effectuée par des méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney.

Le ou les sucres hydrogénés sont choisis de préférence dans le groupe constitué de l'érythritol, l'arabitol, le xylitol, le sorbitol, le mannitol, l'iditol, et les produits d'hydrogénation d'hydrolysats d'amidon.

Les hydrolysats d'amidon sont des produits obtenus par hydrolyse enzymatique et/ou acide d'amidon. Le degré d'hydrolyse est généralement caractérisé par l'équivalent dextrose (DE), défini par la relation suivante :

$$DE = 100 \times \left( \frac{\text{nombre de liaisons glycosidiques rompues}}{\text{nombre de liaisons glycosidiques dans l'amidon initial}} \right)$$

Les hydrolysats d'amidon préférés ont, avant l'étape d'hydrogénation, un DE compris entre 5 et 99, et avantageusement entre 10 et 80.

On utilisera de manière particulièrement préférée un sucre hydrogéné de formule $C_nH_{2n+2}O_n$ où n vaut 4, 5 ou 6, et les produits d'hydrogénation d'hydrolysats d'amidon.

Par ailleurs, pour des raisons d'innocuité des fumées de combustion des mousses polyester obtenues, les compositions expansibles thermodurcissables contiennent de préférence moins de 1 % en poids, en particulier moins de 0,1 % en poids de glycérol, et sont de préférence exemptes de glycérol.

Les autres polyols (différents d'un sucre hydrogéné) sont de préférence, mais pas nécessairement, des polyols biosourcés, en particulier des sucres.

Les sucres utilisables en tant que partie du composant polyol peuvent être des sucres réducteurs ou des sucres non réducteurs.

On entend par sucres réducteurs les hydrates de carbone de formule $(CH_2O)_n$ présentant au moins un groupe aldéhyde ou cétone (groupe réducteur). Les sucres réducteurs utilisables dans la présente invention englobent les oses (monosaccharides) et les osides (disaccharides, oligosaccharides et polysaccharides).

A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose.

Le lactose ou le maltose sont des exemples de disaccharides utilisables en tant que sucres réducteurs.

On pourra également utiliser de manière avantageuse des hydrolysats d'amidon obtenus par hydrolyse enzymatique ou hydrolyse acide d'amidon.

Les sucres non-réducteurs utilisables sont le saccharose et le tréhalose.

Dans un mode de réalisation préféré, le composant polyol comprend au moins 50 % en poids, de préférence au moins 60 % en poids, plus préférentiellement au moins 80 %, et idéalement au moins 90 % en poids de sucre hydrogéné.

Dans un mode de réalisation avantageux, au moins une partie des polyols, qu'il s'agisse des sucres ou des sucres hydrogénés, sont porteurs de groupes hydrophobes tels que des chaînes grasses ou des groupes aromatiques. L'introduction de tels groupes hydrophobes permet d'augmenter le caractère hydrophobe des mousses et réduire leur affinité pour l'eau.

Le deuxième composant essentiel du mélange réactionnel de départ et de la composition expansible thermodurcissable est le composant polyacide.

Le composant polyacide comprend au moins un polyacide porogène. Ce polyacide porogène est un acide qui comporte au moins deux fonctions carboxyle et qui, dans les conditions de thermodurcissement de la mousse, se dégrade et libère un composant gazeux (généralement du $CO_2$) qui permet l'expansion de la composition et la formation de la mousse.

L'acide citrique est connu pour son pouvoir porogène et est l'acide porogène préféré.

La Demanderesse a mis en évidence récemment que d'autres acides dicarboxyliques pouvaient remplacer partiellement ou totalement l'acide citrique en tant qu'agent porogène. La demande française 16 62370 citée en introduction et non encore publiée au moment du dépôt de la présente demande, décrit en détail ces acides porogènes choisis parmi les acides dicarboxyliques $\alpha$-hydroxylés et leur utilisation pour la formation de mousses biosourcées.

Dans un mode de réalisation préféré du procédé de l'invention, les acides dicarboxyliques $\alpha$-hydroxylés préférés sont l'acide tartrique (HOOC-CHOH-CHOH-COOH) et l'acide malique (HOOC-CH$_2$-CHOH-COOH). Le composant polyacide comprend de préférence au moins 50 % en poids, en particulier au moins 65 % en poids et idéalement au moins 80 % en poids de polyacide porogène, de préférence d'acide citrique, rapporté au poids total du composant polyacide.

D'autres polyacides, c'est-à-dire des polyacides non-porogènes, susceptibles de réagir avec le composant polyol pour former un réseau de polyester peuvent être présents. L'utilisation de ces acides permet l'ajustement, en particulier l'augmentation, de la masse volumique des mousses formées. Ces autres polyacides sont de préférence des polyacides monomères, autrement dit des polyacides qui ne sont pas formés par polymérisation de monomères portant un groupe acide, tels que l'acide (meth)acrylique.

Les autres polyacides sont de préférence des acides polycarboxyliques, par exemple des acides dicarboxyliques, tricarboxyliques ou tétracarboxyliques.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique. Bien entendu, on pourra utiliser avantageusement les anhydrides des diacides précités, qui sont généralement plus réactifs que les diacides correspondants.

Les acides tricarboxyliques englobent, par exemple, l'acide tricarballylique, l'acide 1,2,4-butanetricarboxylique, l'acide aconitique, l'acide hémimellitique, l'acide trimellitique et l'acide trimésique ;

On peut citer comme acide tétracarboxylique, par exemple l'acide 1,2,3,4-butane-tétracarboxylique et l'acide pyroméllitique.

Les composants polyol et polyacide tels que définis ci-dessus représentent, ensemble, au moins 80 %, de préférence au moins 85 %, et idéalement au moins 90 % du poids sec de la composition de préoligomérisation (mélange réactionnel de départ).

Par ailleurs, après préoligomérisation et ajout de l'agent tensioactif, les composants polyol, le composant polyacide et l'ester oligomère formé représentent avantageusement ensemble au moins 60 %, de préférence au moins 70 % et en particulier au moins 80 % du poids sec de la composition expansible thermodurcissable.

Dans la composition de préoligomérisation, le composant polyol représente de préférence de 20 à 60 % en poids, en particulier de 25 à 50 % en poids et idéalement de 30 à 45 % en poids du poids total des composants polyol et polyacide. Il en découle logiquement que le composant polyacide représente de préférence de 40 à 80 % en poids, en particulier de 50 à 75 % en poids, et idéalement de 55 à 70 % en poids du poids total des composants polyol et polyacide.

De manière connue, on ajustera les quantités respectives des composants polyol et polyacide de manière à ce que les fonctions -OH et les fonctions -COOH soient présentes en un rapport molaire compris entre 0,65 et 1,8, de préférence entre 0,8 et 1,6, en particulier entre 1,0 et 1,4.

La réaction d'oligomérisation en masse (étape (a)) peut être mise en œuvre en présence d'un catalyseur d'estérification connu choisi par exemple parmi les acides forts tels que l'acide sulfurique, l'acide chlorhydrique, l'acide para-toluène-sulfonique, l'acide trifluorométhanesulfonique et l'acide trifluroacétique, et les acides de Lewis couramment utilisés pour la catalyse des réactions d'estérification tels que les zirconates et les titanates, les acides de Lewis à base de zinc, de fer et d'aluminium.

La réaction de préoligomérisation en masse peut également être catalysée par l'hypophosphite de sodium qui n'est pas à proprement parler un catalyseur d'estérification, mais dont on pense qu'il favorise la formation d'anhydrides de l'acide citrique. Ces derniers sont plus réactifs que le triacide et sont capables de réagir avec les polyols.

L'un et/ou l'autre de ces deux types de catalyseurs seront donc présents dans la composition de préoligomérisation.

Lorsqu'on utilise pour la catalyse de la réaction d'oligomérisation un catalyseur d'estérification tel qu'un acide fort, il est souhaitable d'ajouter à la composition expansible thermodurcissable, au moment de l'étape (b), une quantité efficace d'hypophosphite de sodium ou d'acide hypophosphoreux, par exemple une quantité comprise entre 0,5 et 10 % en poids, de préférence entre 1,0 et 5 % en poids, rapporté au poids des matières solides de la composition de liant. L'hypophosphite de sodium et l'acide correspondant sont en effet, à ce jour, les composés qui catalysent le plus efficacement le durcissement des oligomères en liant thermodurci, insoluble dans l'eau.

La réaction de préoligomérisation est mise en œuvre à une température supérieure ou égale à 100 °C et inférieure à 160 °C. Il est nécessaire de chauffer le mélange réactionnel à une température au moins égale à 100 °C pour évaporer l'eau formée par la réaction de condensation (estérification). Lorsqu'on chauffe la composition de préoligomérisation au-delà de 160 °C, l'acide citrique risque de se dégrader prématurément, libérant du dioxyde de carbone qui s'échappera de la composition réactionnelle insuffisamment visqueuse et sous agitation.

Après l'étape (a) d'oligomérisation ou à la fin de celle-ci, on ajoute et incorpore au mélange d'oligomères obtenu une composition d'agent tensioactif (étape (b).

La composition d'agent tensioactif peut contenir de l'eau, ou bien on pourra introduire de l'eau en même temps que la composition d'agent tensioactif. La présence d'un peu d'eau peut être souhaitable car elle facilite l'incorporation de l'agent tensioactif dans le mélange d'oligomères et le moussage du mélange obtenu.

Dans un mode de réalisation avantageux, le procédé de fabrication de mousses polyester thermodurcies de la présente invention comprend, pendant ou après l'étape (b) et avant les étapes (c) et (d), le moussage de la composition expansible thermodurcissable. Ce moussage, c'est-à-dire l'incorporation d'air ou d'un autre gaz dans la composition expansible thermodurcissable liquide, permet d'augmenter le volume de la composition expansible thermodurcissable, de réduire la masse volumique des mousses finales et d'homogénéiser la distribution des tailles des pores dans les mousses finales.

Le moussage peut être mise en œuvre par des moyens mécaniques, par exemple par fouettage, battage ou agitation mécanique et/ou par injection de gaz.

Bien que la présence d'eau au cours de l'étape (b) puisse être intéressante pour des raisons de facilité de mise en œuvre de la composition expansible thermodurcissable, on veillera à limiter le plus possible cette quantité d'eau. En effet, les deux réactions qui aboutissent à la formation d'une mousse polyester thermodurcie, à savoir l'estérification des oligomères et la décomposition de l'acide citrique, ne pourront avoir lieu qu'après évaporation complète de l'eau, ce qui demande nécessairement un apport d'énergie thermique additionnelle.

Par conséquent, la composition expansible thermodurcissable contient de préférence au plus 25 % en poids, plus préférentiellement au plus 15 % en poids et en particulier au plus 5 % en poids d'eau.

Le quatrième composant essentiel de la composition expansible thermodurcissable est un agent tensioactif. Dans la présente demande ce terme englobe également des mélanges de plusieurs agents tensioactifs.

Comme déjà expliqué ci-avant, cet agent tensioactif est de préférence ajouté après l'étape d'oligomérisation ou à la fin de l'étape d'oligomérisation.

La fonction de cet ingrédient est d'améliorer la qualité de la mousse, c'est-à-dire de réduire la taille des pores, de resserrer la distribution de la taille des pores et de réduire la masse volumique des mousses durcies obtenues.

L'agent tensioactif présente de préférence une balance hydrophile/lipophile (HLB) comprise entre 3 et 13, de préférence entre 5 et 8.

Dans un mode de réalisation, l'agent tensioactif est un mélange d'un tensioactif anionique et d'un tensioactif cationique. Dans le domaine des mousses aqueuses liquides, il est connu qu'une association de deux types d'agents tensioactifs de charges opposées permet de stabiliser le film de tensioactifs à l'interface eau/air en réduisant la répulsion entre molécules de même charge. Comme il sera montré ci-après dans les exemples, la Demanderesse a obtenu d'excellents résultats avec un mélange de dodécylsulfate de sodium (SDS) et de bromure de tétradécyltriméthyl ammonium (TTAB) ou de bromure de cétyltriméthylammonium (CTAB) et l'utilisation d'une association de ces deux types agents tensioactifs constitue donc un mode de réalisation préféré. Le rapport en poids TTAB/SDS ou CTAB/SDS est de préférence compris entre 1,5 et 2,5, en particulier entre 1,8 et 2,2 et idéalement proche de 2.

Les agents tensioactifs non-ioniques constituent une alternative intéressante à l'association d'un tensioactif anionique et d'un tensioactif cationique. En effet, pour les agents tensioactifs non-ioniques, il n'existe pas de forces de répulsion entre têtes hydrophiles de même charge et certains tensioactifs non-ioniques sont de ce fait particulièrement appropriés pour la formation de mousses de bonne qualité. Les agents tensioactifs non-ioniques utilisés dans la présente invention ont de préférence une HLB comprise entre 3 et 13.

C'est le cas par exemple des alkylpolyglycosides (APG) qui sont des molécules comportant une tête hydrophile formée d'un ou de plusieurs motifs de sucre, greffée de chaîne grasse alkyle.

Les alkylpolyglycosides comportent de préférence entre 1 et 2 motifs glucoside et les chaînes alkyle comportent de préférence de 8 à 14 atomes de carbone et sont de préférence des chaînes alkyle linéaires.

On peut citer à titre d'exemples d'alkylpolyglycosides les produits de la marque Glucopon, notamment le Glucopon 600 CSUP (lauryl glucoside) et le Glucopon 650 EC (coco glucoside).

La quantité de l'agent tensioactif représente avantageusement de 0,1 à 10 %, de préférence de 1 à 8 % et en particulier de 2 à 6 % du poids sec total de la composition expansible.

La composition expansible thermodurcissable peut contenir en outre jusqu'à 30 % en poids, de préférence jusqu'à 20 % en poids, en particulier jusqu'à 10 % en poids, rapportés au poids sec de la composition expansible totale, d'une ou plusieurs charges minérales ou organiques.

Enfin, la composition expansible peut contenir un ou plusieurs autres additifs utilisés classiquement dans l'industrie de la mise en œuvre et transformation des polymères tels que des colorants, pigments, agents anti-bactériens ou anti-fongiques, agents ignifugeants, absorbeurs UV, agents hydrophobes. Ces additifs représentent au total de préférence au plus 10 % du poids sec de la composition.

Bien que la composition expansible puisse contenir, en principe, un agent d'expansion organique, il est important de noter qu'il n'est pas nécessaire d'en ajouter.

En effet, l'acide citrique, présent dans le composant polyacide, joue le rôle d'agent d'expansion. Lorsque la composition expansible est chauffée, à l'étape (c), à une température proche de 170 °C, l'acide citrique se décompose, de manière connue, en acide aconitique et $CO_2$ (M. M. Barbooti et al. « Thermal Decomposition of Citric Acid », Thermochimica Acta, 98 (1986), 119-126 ; D. Wyrzykowski et al. "Thermal Behavior of Citric Acid and Isomeric Aconitic Acids", J. Therm. Anal. Calorim. (2001), 104 :731-735). Il sera montré ci-après dans les exemples de réalisation que des mousses de bonne qualité et de faible masse volumique peuvent être obtenues en l'absence de tout agent d'expansion physique. Lorsque l'étape (d) est mise en œuvre à une température supérieure à 170 °C, l'ajout d'un agent d'expansion organique est donc superflu. Dans un mode de réalisation préféré du procédé de la présente invention, la composition expansible est donc essentiellement exempte d'agent d'expansion physique organique.

La composition d'esters oligomères (mélange d'oligomères), ne contenant pas d'agent tensioactif, et la composition expansible thermodurcissable renfermant l'agent tensioactif peuvent être refroidies et conservées et/ou transportées sous forme de pâte ou de granulés. Ces granulés ou cette pâte peuvent ensuite être fondues par simple chauffage à une température proche de 100 °C et utilisées pour la fabrication de mousses polyesters thermodurcies.

La présente demande a également pour objet une composition expansible thermodurcissable, solide à température ambiante, essentiellement exempte d'eau, obtenue par

(i) chauffage d'une composition de préoligomérisation essentiellement anhydre, contenant

- un composant polyol comprenant au moins 30 % en poids de sucre hydrogéné choisi parmi les sucres hydrogénés de formule $C_nH_{2n+2}O_n$ où vaut 4, 5, ou 6, et les produits d'hydrogénation d'hydrolysats d'amidon,
- un composant polyacide comprenant un polyacide porogène choisi parmi l'acide citrique et les acides dicarboxyliques $\alpha$-hydroxylés de formule (I) $HOOC-(CHR^1)_n-CHOH-COOH$ où
  n est un entier allant de 1 - 4, de préférence de 1 - 3, en particulier 1 ou 2, et de manière tout particulièrement préférée 1, et
  chaque $R^1$ représente indépendamment un atome d'hydrogène, un groupe hydroxyle (-OH) ou un groupe alkyle, de préférence un groupe alkyle en $C_{1-4}$, et
- un catalyseur,

ladite composition de préoligomérisation contenant moins de 1 % en poids de glycérol,
à une température comprise entre 100 °C et moins de 160 °C pendant une durée comprise entre 10 et 60 minutes, de préférence entre 15 et 40 minutes, sous agitation mécanique, de manière à faire réagir le composant polyol avec le composant polyacide et à former une composition d'esters oligomères,
(ii) incorporation d'une composition d'agent tensioactif dans la composition d'esters oligomères, de manière à obtenir une composition expansible thermodurcissable, et
(iii) refroidissement de la composition expansible thermodurcissable jusqu'à température ambiante.

La présente demande a en outre pour objet l'utilisation d'une telle composition expansible thermodurcissable, solide à température ambiante et essentiellement exempte d'eau, pour la fabrication de mousses polyester thermodurcies.

Lorsque la composition expansible thermodurcissable chaude est étalée sous forme d'un film continu sur un support, l'épaisseur du film, avant chauffage, c'est-à-dire avant expansion et durcissement, est avantageusement au moins égale à 1 mm, de préférence au moins égale à 2 mm, en particulier au moins égale à 5 mm, et plus préférentiellement au moins égale à 10 mm.

Le volume du bloc de mousse formé peut varier entre de très larges limites. Lorsque la composition expansible est utilisée dans un procédé continu formant par exemple des bandes ou profilés de matériaux isolants, il est potentiellement infini. Lorsque la composition expansible est utilisée pour former des blocs discrets, par exemple des plaques ou feuilles de mousses, sa quantité est de préférence telle que le volume de chaque bloc de mousse solide thermodurcie soit au moins égal à 500 $cm^3$, de préférence au moins égal à 0,001 $m^3$, en particulier au moins égal à 0,01 $m^3$.

Le bloc de mousse se présente de préférence sous forme d'une plaque.

Pour chauffer la composition expansible à l'étape (d) on pourra utiliser en principe n'importe quel moyen usuel connu dans le domaine de la mise en œuvre et transformation des polymères, tels que l'air chaud, le rayonnement thermique, les micro-ondes ou la mise en contact avec un support chaud (moule).

Bien entendu, la température du moyen de chauffage (étuve, support, moule) pourra être supérieure à la température réactionnelle indiquées pour l'étape (d).

La durée de l'étape de chauffage (étape (d)) dépend non seulement de la température, mais également du moyen de chauffage et du rapport volume/surface du bloc de mousse formé. Elle est peut aller de quelques minutes à plusieurs heures, typiquement de 10 minutes et 8 heures, de préférence de 20 minutes à 7 heures et en particulier de 30 minutes à 6 heures.

Dans un mode de réalisation préféré, le procédé selon l'invention comprend en outre une étape d'usinage de la mousse polyester thermodurcie obtenue à l'étape (d).

**Exemples**

Procédé comparatif (sans étape de prépolymérisation)

On prépare une composition expansible thermodurcissable en ajoutant 74 parts en poids d'acide citrique en poudre à une solution aqueuse contenant 26 parts en poids de glycérol, érythritol ou sorbitol. On ajoute ensuite 5 parts en poids de catalyseur d'estérification (hypophosphite de sodium monohydraté, HPS) sous forme de poudre, puis 5,1 parts d'agent tensioactif (mélange (1/1) de bromure de tétradécyltriméthylammonium (TTAB) et de docécylsulfate de sodium (SDS) sous forme de solution aqueuse à 25 %), et on ajuste l'extrait sec du mélange à 66 % en poids. On agite le mélange à température ambiante jusqu'à dissolution de la poudre d'acide citrique.

Procédé selon l'invention (avec étape de prépolymérisation)

Par ailleurs, on prépare une composition expansible thermodurcissable en ajoutant 74 parts en poids d'acide citrique en poids à 26 parts en poids d'érythritol ou de sorbitol et 5 parts en poids HPS en poudre. Le mélange est agité vigoureusement pendant 25 minutes à une température de 140°C (étape de prépolymérisation en l'absence d'agent tensioactif).

On ajoute ensuite 5,1 parts en poids d'agent tensioactif (mélange (1/1) de bromure de tétradécyltriméthylammonium (TTAB) et de docécylsulfate de sodium (SDS)) en poudre et on agite le mélange obtenu vigoureusement pendant deux minutes supplémentaires. L'extrait sec de la composition ainsi obtenu est de 98 % en poids.

Les quatre préparations sont ensuite versées dans des moules rectangulaires. L'épaisseur de la couche de composition expansible thermodurcissable est d'environ 5 mm.

Les moules contenant les compositions sont chauffés pendant 1h30 dans une étuve ventilée, thermostatée à 180°C, elles sont ensuite découpées selon les dimensions souhaitées (5(H)*20(L)*20(l) cm) et recuites pendant 6h dans une étuve ventilée thermostatée à 220°C.

Après sortie des moules de l'étuve et refroidissement des mousses formées jusqu'à température ambiante, des mesures de résistance à la déformation sont réalisées à l'aide d'un banc de compression sur des cylindres de mousses de 1,5 cm de diamètre et 1,5 cm de hauteur. On mesure la contrainte (force/surface) au moment où le cylindre a subi une déformation de 10% de sa hauteur initiale soit de 1,5 mm.

La porosité des mousses est mesurée par tomographie à rayons X sur des cylindres de mousses de 0,5 cm de diamètre et 1 cm de hauteur.

Tableau 1

| | Sucre hydrogéné | Masse volumique $(kg/m^3)$ | Contrainte à 10 % de déformation (kPa) | Taille moyenne des cellules $(\mu m)$ |
|---|---|---|---|---|
| Mousses comparatives | Glycérol | 27 ± 1 | 14 ± 6 | 725 |
| | Sorbitol | 30 ± 3 | 27 ± 7 | 750 |
| | Erythritol | 30 ± 2 | 25 ± 5 | 680 |
| Mousses selon l'invention | Erythritol | 58 ± 5 | 100 ± 15 | 380 |
| | Sorbitol | 60 ± 5 | 110 ± 20 | 360 |

On constate que les mousses préparées selon le procédé de la présente invention, comportant une étape de prépolymérisation en l'absence d'agent tensioactif, ont une résistance à la compression considérablement plus élevée et une porosité plus fines que les mousses de l'état de la technique.

**Revendications**

1. Procédé de fabrication d'une mousse polyester thermodurcie, comprenant les étapes successives suivantes :

   (a) chauffage d'une composition de préoligomérisation essentiellement anhydre, contenant

   - un composant polyol, comprenant au moins 30 % en poids de sucre hydrogéné choisi parmi les sucres hydrogénés de formule $C_nH_{2n+2}O_n$ où n vaut 4, 5 ou 6, et les produits d'hydrogénation d'hydrolysats d'amidon,
   - un composant polyacide comprenant un polyacide porogène choisi de préférence parmi l'acide citrique et les acides dicarboxyliques $\alpha$-hydroxylés de formule (I) $HOOC\text{-}(CHR^1)_n\text{-}CHOH\text{-}COOH$ où

      n est un entier allant de 1 - 4, de préférence de 1 - 3, en particulier 1 ou 2, et de manière tout particulièrement préférée 1, et
      chaque $R^1$ représente indépendamment un atome d'hydrogène, un groupe hydroxyle (-OH) ou un groupe alkyle, de préférence un groupe alkyle en $C_{1\text{-}4}$, et

   - un catalyseur,

   ladite composition de préoligomérisation contenant moins de 1 % en poids de glycérol,
   à une température comprise entre 100 °C et moins de 160 °C pendant une durée comprise entre 10 et 60 minutes, de préférence entre 15 et 40 minutes, sous agitation mécanique, de manière à faire réagir le composant polyol avec le composant polyacide et à former une composition d'esters oligomères,
   (b) incorporation d'une composition d'agent tensioactif dans la composition d'esters oligomères, de manière à obtenir une composition expansible thermodurcissable,
   (c) introduction de la composition expansible thermodurcissable obtenue dans un moule ou application de la composition expansible et thermodurcissable sur un support,
   (d) chauffage de la composition expansible thermodurcissable à une température au moins égale à 160 °C, de préférence comprise entre 165 °C et 185 °C, pendant une durée comprise entre 10 minutes et 8 heures, de préférence entre 20 minutes et 7 heures et en particulier entre 30 minutes et 6 heures, de manière à former une mousse polyester thermodurcie.

2. Procédé selon la revendication 1, **caractérisé par le fait qu'**il comprend en outre, pendant ou après l'étape (b) et avant l'étape (c), le moussage de la composition expansible thermodurcissable.

3. Procédé selon la revendication 2, **caractérisé par le fait que** le moussage est mis en œuvre par fouettage, battage, agitation mécanique et/ou injection de gaz.

4. Procédé selon l'une des revendications précédentes, **caractérisé par le fait que** le composant polyol et le composant polyacide représentent ensemble au moins 80 % en poids, de préférence au moins 85 % en poids, et idéalement au moins 90 % en poids de la composition de préoligomérisation.

5. Procédé selon l'une des revendications précédentes, **caractérisé par le fait que** le composant polyol comprend au moins 50 % en poids, de préférence au moins 60 % en poids, plus préférentiellement au moins 80 %, et idéalement au moins 90 % en poids de sucre hydrogéné.

6. Procédé selon l'une quelconque des revendications précédentes, **caractérisé par le fait que** le sucre hydrogéné est un sucre hydrogéné de formule $C_nH_{2n+2}O_n$ où n vaut 4, 5 ou 6.

7. Procédé selon l'une des revendications précédentes, **caractérisé par le fait que** le composant polyacide comprend au moins 50 % en poids, de préférence au moins 65 % en poids et en particulier au moins 80 % en poids de polyacide porogène.

8. Procédé selon l'une quelconque des revendications précédentes, **caractérisé par le fait que** le composant polyol représente de 20 à 60 %, de préférence de 25 à 50 % et en particulier de 30 à 45 % du poids total des composants polyol et polyacide.

9. Procédé selon l'une quelconque des revendications précédentes, **caractérisé par le fait que** la composition expansible thermodurcissable contient au plus 25 % en poids, plus préférentiellement au plus 15 % en poids et en particulier au plus 5 % en poids d'eau.

10. Procédé selon l'une quelconque des revendications précédentes, **caractérisé par le fait que** l'agent tensioactif est un mélange d'un tensioactif anionique et d'un tensioactif cationique, de préférence un mélange de dodécylsulfate de sodium (SDS) et de bromure de tétradécyltriméthyl ammonium (TTAB) ou un mélange de dodécylsulfate de sodium (SDS) et de bromure de cétyltrimethylammonium (CTAB).

11. Procédé selon l'une quelconque des revendications 1 à 9, **caractérisé par le fait que** l'agent tensioactif est choisi parmi les alkylpolyglycosides.

12. Procédé selon l'une quelconque des revendications précédentes, **caractérisé par le fait qu'**il comprend en outre l'introduction dans la composition expansible thermodurcissable jusqu'à 30 % en poids, de préférence jusqu'à 20 % en poids, en particulier jusqu'à 10 % en poids, rapportés au poids sec de la composition expansible totale, d'une ou plusieurs charges minérales ou organiques.

13. Procédé selon l'une quelconque des revendications précédentes, **caractérisé par le fait que** le polyacide porogène est choisi dans le groupe constitué d'acide citrique, d'acide malique et d'acide tartrique, de préférence d'acide citrique.

14. Procédé selon l'une quelconque des revendications précédentes, **caractérisé par le fait qu'**il comprend en outre une étape d'usinage de la mousse polyester thermodurcie obtenue à l'étape (d).

15. Composition expansible thermodurcissable, solide à température ambiante et essentiellement exempte d'eau, obtenue par

(i) chauffage d'une composition de préoligomérisation essentiellement anhydre, contenant

- un composant polyol comprenant au moins 30 % en poids de sucre hydrogéné choisi parmi les sucres hydrogénés de formule $C_nH_{2n+2}O_n$ où n vaut 4, 5 ou 6, et les produits d'hydrogénation d'hydrolysats d'amidon,
- un composant polyacide comprenant un polyacide porogène choisi parmi l'acide citrique et les acides dicarboxyliques $\alpha$-hydroxylés de formule (I) HOOC-$(CHR^1)_n$-CHOH-COOH où

n est un entier allant de 1 - 4, de préférence de 1 - 3, en particulier 1 ou 2, et de manière tout particulièrement préférée 1, et

chaque $R^1$ représente indépendamment un atome d'hydrogène, un groupe hydroxyle (-OH) ou un groupe alkyle, de préférence un groupe alkyle en $C_{1-4}$, et

- un catalyseur,

ladite composition de préoligomérisation contenant moins de 1 % en poids de glycérol,
à une température comprise entre 100 °C et moins de 160 °C pendant une durée comprise entre 10 et 60 minutes, de préférence entre 15 et 40 minutes, sous agitation mécanique, de manière à faire réagir le composant polyol avec le composant polyacide et à former une composition d'esters oligomères,

(ii) incorporation d'une composition d'agent tensioactif dans la composition d'esters oligomères, de manière à obtenir une composition expansible thermodurcissable, et

(iii) refroidissement de la composition expansible thermodurcissable jusqu'à température ambiante.

16. Utilisation d'une composition expansible thermodurcissable, solide à température ambiante et essentiellement exempte d'eau selon la revendication 15, pour la fabrication de mousses polyester thermodurcies.

**Patentansprüche**

1. Verfahren zur Herstellung eines wärmegehärteten Polyesterschaums, umfassend die folgenden aufeinanderfolgenden Schritte:

(a) Erwärmen einer im Wesentlichen wasserfreien Vorologomerisierungszusammensetzung, enthaltend

- eine Polyolkomponente, umfassend mindestens 30 Gew.-% hydrierten Zucker, ausgewählt aus hydrierten Zuckern der Formel $C_nH_{2n}+_2O_n$, worin n 4, 5 oder 6 beträgt, und Hydrierungsprodukten von Stärkehydrolysaten,
- eine Polysäurekomponente, umfassend eine porenbildende Polysäure, vorzugsweise ausgewählt aus Zitronensäure und $\alpha$-hydroxylierten Dicarbonsäuren der Formel (I) HOOC-$(CHR^1)_n$-CHOH-COOH, worin

n eine ganze Zahl ist, die von 1 - 4, vorzugsweise von 1 - 3 reicht, insbesondere 1 oder 2 und ganz besonders bevorzugt 1 und
jeder $R^1$ unabhängig ein Wasserstoffatom, eine Hydroxylgruppe (-OH) oder eine Alkylgruppe, vorzugsweise eine $C_{1-4}$-Alkylgruppe, darstellt, und

- einen Katalysator,

wobei die Vorologomerisierungszusammensetzung weniger als 1 Gew.-% Glycerin enthält,
bei einer Temperatur zwischen 100 °C und weniger als 160 °C während eines Zeitraums zwischen 10 und 60 Minuten, vorzugsweise zwischen 15 und 40 Minuten, unter mechanischem Rühren, um die Polyolkomponente mit der Polysäurekomponente umzusetzen und um eine Zusammensetzung oligomerer Ester zu bilden,

(b) Einbringen einer Tensidmittelzusammensetzung in die Zusammensetzung oligomerer Ester, um eine wärmehärtbare expandierbare Zusammensetzung zu erhalten,
(c) Einführen der erhaltenen wärmehärtbaren expandierbaren Zusammensetzung in eine Form oder Aufbringen der expandierbaren und wärmehärtbaren Zusammensetzung auf einen Träger,
(d) Erwärmen der wärmehärtbaren expandierbaren Zusammensetzung auf eine Temperatur von mindestens 160 °C, vorzugsweise zwischen 165 °C und 185 °C, während eines Zeitraums zwischen 10 Minuten und 8 Stunden, vorzugsweise zwischen 20 Minuten und 7 Stunden und insbesondere zwischen 30 Minuten und 6 Stunden, um einen wärmegehärteten Polyesterschaum zu bilden.

2. Verfahren nach Anspruch 1, **dadurch gekennzeichnet, dass** es ferner während oder nach Schritt (b) und vor Schritt (c) das Aufschäumen der wärmehärtbaren expandierbaren Zusammensetzung umfasst.

3. Verfahren nach Anspruch 2, **dadurch gekennzeichnet, dass** das Aufschäumen durch Aufschlagen, Schlagen, mechanisches Rühren und/oder Einspritzen von Gas durchgeführt wird.

4. Verfahren nach einem der vorstehenden Ansprüche, **dadurch gekennzeichnet, dass** die Polyolkomponente und die Polysäurekomponente zusammen mindestens 80 Gew.-%, vorzugsweise mindestens 85 Gew.-% und idealerweise mindestens 90 Gew.-% der Vorologomerisierungszusammensetzung darstellen.

5. Verfahren nach einem der vorstehenden Ansprüche, **dadurch gekennzeichnet, dass** die Polyolkomponente mindestens 50 Gew.-%, vorzugsweise mindestens 60 Gew.-%, mehr bevorzugt mindestens 80 Gew.-% und idealerweise mindestens 90 Gew.-% hydrierten Zucker umfasst.

6. Verfahren nach einem der vorstehenden Ansprüche, **dadurch gekennzeichnet, dass** der hydrierte Zucker ein hydrierter Zucker der Formel $C_nH_{2n+2}O_n$ ist, worin n 4, 5 oder 6 beträgt.

7. Verfahren nach einem der vorstehenden Ansprüche, **dadurch gekennzeichnet, dass** die Polysäurekomponente mindestens 50 Gew.-%, vorzugsweise mindestens 65 Gew.-% und insbesondere mindestens 80 Gew.-% porenbildende Polysäure umfasst.

8. Verfahren nach einem der vorstehenden Ansprüche, **dadurch gekennzeichnet, dass** die Polyolkomponente 20 bis 60 %, vorzugsweise 25 bis 50 % und insbesondere 30 bis 45 % des Gesamtgewichts der Polyol- und Polysäurekomponenten repräsentiert.

9. Verfahren nach einem der vorstehenden Ansprüche, **dadurch gekennzeichnet, dass** die wärmehärtbare expandierbare Zusammensetzung höchstens 25 Gew.-%, mehr bevorzugt höchstens 15 Gew.-% und insbesondere höchstens 5 Gew.-% Wasser enthält.

10. Verfahren nach einem der vorstehenden Ansprüche, **dadurch gekennzeichnet, dass** das Tensidmittel eine Mischung aus einem anionischen Tensid und einem kationischen Tensid, vorzugsweise eine Mischung aus Natriumdodecylsulfat (SDS) und Tetradecyltrimethylammoniumbromid (TTAB) oder eine Mischung aus Natriumdodecylsulfat (SDS) und Cetyltrimethylammoniumbromid (CTAB), ist.

11. Verfahren nach einem der Ansprüche 1 bis 9, **dadurch gekennzeichnet, dass** das Tensidmittel aus Alkylpolyglycosiden ausgewählt ist.

12. Verfahren nach einem der vorstehenden Ansprüche, **dadurch gekennzeichnet, dass** es ferner das Einführen von bis zu 30 Gew.-%, vorzugsweise bis zu 20 Gew.-%, insbesondere bis zu 10 Gew.-%, bezogen auf das Trockengewicht der gesamten expandierbaren Zusammensetzung, eines oder mehrerer mineralischer oder organischer Füllstoffe in die wärmehärtbare expandierbare Zusammensetzung umfasst.

13. Verfahren nach einem der vorstehenden Ansprüche, **dadurch gekennzeichnet, dass** die porenbildende Polysäure ausgewählt ist aus der Gruppe bestehend aus Zitronensäure, Äpfelsäure und Weinsäure, vorzugsweise Zitronensäure.

14. Verfahren nach einem der vorstehenden Ansprüche, **dadurch gekennzeichnet, dass** es ferner einen Bearbeitungsschritt des in Schritt (d) erhaltenen wärmegehärteten Polyesterschaums umfasst.

15. Wärmehärtbare expandierbare Zusammensetzung, bei Raumtemperatur fest und im Wesentlichen frei von Wasser, , erhalten durch

    (i) Erwärmen einer im Wesentlichen wasserfreien Voroligomerisierungszusammensetzung, enthaltend

    - eine Polyolkomponente, umfassend mindestens 30 Gew.-% hydrierten Zucker, ausgewählt aus hydrierten Zuckern der Formel $C_nH_{2n+2}O_n$, worin n 4, 5 oder 6 beträgt, und Hydrierungsprodukten von Stärkehydrolysaten,
    - eine Polysäurekomponente, umfassend eine porenbildende Polysäure, ausgewählt aus Zitronensäure und $\alpha$-hydroxylierten Dicarbonsäuren der Formel (I) HOOC-(CHR$^1$)$_n$-CHOH-COOH, worin

    n eine ganze Zahl ist, die von 1 - 4, vorzugsweise von 1 - 3 reicht, insbesondere 1 oder 2 und ganz besonders bevorzugt 1 und
    jeder R$^1$ unabhängig ein Wasserstoffatom, eine Hydroxylgruppe (-OH) oder eine Alkylgruppe, vorzugsweise eine $C_{1-4}$-Alkylgruppe, darstellt, und

    - einen Katalysator,

    wobei die Voroligomerisierungszusammensetzung weniger als 1 Gew.-% Glycerin enthält,
    bei einer Temperatur zwischen 100 °C und weniger als 160 °C während eines Zeitraums zwischen 10 und 60 Minuten, vorzugsweise zwischen 15 und 40 Minuten, unter mechanischem Rühren, um die Polyolkomponente mit der Polysäurekomponente umzusetzen und um eine Zusammensetzung oligomerer Ester zu bilden,

(ii) Einbringen einer Tensidmittelzusammensetzung in die Zusammensetzung oligomerer Ester, um eine wärmehärtbare expandierbare Zusammensetzung zu erhalten, und
(iii) Abkühlen der wärmehärtbaren expandierbaren Zusammensetzung auf Raumtemperatur.

**16.** Verwendung einer wärmehärtbaren expandierbaren Zusammensetzung, bei Raumtemperatur fest und im Wesentlichen frei von Wasser, nach Anspruch 15 zur Herstellung von wärmegehärteten Polyesterschäumen.


**Claims**

**1.** A process for the production of a thermoset polyester foam, comprising the following successive steps:

(a) heating an essentially anhydrous pre-oligomerization composition, containing

- a polyol component comprising at least 30% by weight of hydrogenated sugar selected from hydrogenated sugars of formula $C_nH_{2n+2}O_n$ in which n is 4, 5 or 6,
- a polyacid component comprising a pore-forming polyacid preferably chosen from citric acid and $\alpha$-hydroxylated dicarboxylic acids of formula (I) $HOOC-(CHR^1)_n-CHOH-COOH$ in which

n is an integer ranging from 1 - 4, preferably from 1 - 3, in particular 1 or 2 and very particularly preferably 1, and
each $R^1$ independently represents a hydrogen atom, a hydroxyl (-OH) group or an alkyl group, preferably a $C_{1-4}$ alkyl group, and

- a catalyst,

said pre-oligomerization composition containing less than 1 % by weight of glycerol,
at a temperature of between 100°C and less than 160°C for a duration of between 10 and 60 minutes, preferably between 15 and 40 minutes, with mechanical stirring, so as to react the polyol component with the polyacid component and form a composition of oligomeric esters,
(b) incorporating a surfactant composition into the composition of oligomeric esters, so as to obtain a thermosetting expandable composition,
(c) introducing the resulting thermosetting expandable composition into a mold or applying the resulting thermosetting expandable composition to a support,
(d) heating the thermosetting expandable composition at a temperature at least equal to 160°C, preferably between 165°C and 185°C, for a duration of between 10 minutes and 8 hours, preferably between 20 minutes and 7 hours and in particular between 30 minutes and 6 hours, so as to form a thermoset polyester foam.

**2.** The process as claimed in claim 1, **characterized in that** it also comprises, during or after step (b) and before step (c), the foaming of the thermosetting expandable composition.

**3.** The process as claimed in claim 2, **characterized in that** the foaming is carried out by whipping, beating, mechanical stirring and/or injection of gas.

**4.** The process as claimed in one of the preceding claims, **characterized in that** the polyol component and the polyacid component together represent at least 80% by weight, preferably at least 85% by weight, and ideally at least 90% by weight of the pre-oligomerization composition.

**5.** The process as claimed in one of the preceding claims, **characterized in that** the polyol component comprises at least 50% by weight, preferably at least 60% by weight, more preferentially at least 80%, and ideally at least 90% by weight of hydrogenated sugar.

**6.** The process as claimed in one of the preceding claims, **characterized in that** the hydrogenated sugar is a hydrogenated sugar of formula $C_nH_{2n+2}O_n$ in which n is 4, 5 or 6.

7. The process as claimed in one of the preceding claims, **characterized in that** the polyacid component comprises at least 50% by weight, preferably at least 65% by weight, and in particular at least 80% by weight of pore-forming polyacid.

8. The process as claimed in any one of the preceding claims, **characterized in that** the polyol component represents from 20 to 60%, preferably from 25 to 50%, and in particular from 30 to 45% of the total weight of the polyol and polyacid components.

9. The process as claimed in any one of the preceding claims, **characterized in that** the thermosetting expandable composition contains at most 25% by weight, more preferentially at most 15% by weight and in particular at most 5% by weight of water.

10. The process as claimed in any one of the preceding claims, **characterized in that** the surfactant is a mixture of an anionic surfactant and of a cationic surfactant, preferably a mixture of sodium dodecyl sulfate (SDS) and of tetradecyltrimethylammonium bromide (TTAB) or a mixture of sodium dodecyl sulfate (SDS) and of cetyltrimethylammonium bromide (CTAB).

11. The process as claimed in any one of claims 1 to 9, **characterized in that** the surfactant is chosen from alkylpolyglycosides.

12. The process as claimed in any one of the preceding claims, **characterized in that** it also comprises the introduction, into the thermosetting expandable composition, of up to 30% by weight, preferably up to 20% by weight, in particular up to 10% by weight, relative to the dry weight of the total expandable composition, of one or more inorganic or organic fillers.

13. The process as claimed in any one of the preceding claims, **characterized in that** the pore-forming polyacid is selected from the group consisting of citric acid, malic acid and tartaric acid, preferably citric acid.

14. The process as claimed in any one of the preceding claims, **characterized in that** it also comprises a step of machining the thermoset polyester foam obtained in step (d).

15. A thermosetting expandable composition, which is solid at room temperature and essentially water-free, obtained by

(i) heating an essentially anhydrous pre-oligomerization composition, containing

- a polyol component comprising at least 30% by weight of hydrogenated sugar,
- a polyacid component comprising a pore-forming polyacid chosen from citric acid and $\alpha$-hydroxylated dicarboxylic acids of formula (I) $HOOC\text{-}(CHR^1)_n\text{-}CHOH\text{-}COOH$ in which

n is an integer ranging from 1 - 4, preferably from 1 - 3, in particular 1 or 2 and very particularly preferably 1, and
each $R^1$ independently represents a hydrogen atom, a hydroxyl (-OH) group or an alkyl group, preferably a $C_{1\text{-}4}$ alkyl group, and

- a catalyst,

said pre-oligomerization composition containing less than 1 % by weight of glycerol,
at a temperature of between 100°C and less than 160°C for a duration of between 10 and 60 minutes, preferably between 15 and 40 minutes, with mechanical stirring, so as to react the polyol component with the polyacid component and form a composition of oligomeric esters,
(ii) incorporating a surfactant composition into the composition of oligomeric esters, so as to obtain a thermosetting expandable composition, and
(iii) cooling the thermosetting expandable composition down to room temperature.

16. The use of a thermosetting expandable composition, which is solid at room temperature and essentially water-free, as claimed in claim 15, for the production of thermoset polyester foams.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016139401 A
- EP 2628757 A
- WO 2016174328 A
- FR 3060009
- WO 2016207517 A
- WO 2010059925 A
- FR 1662370

**Littérature non-brevet citée dans la description**

- **M. M. BARBOOTI et al.** Thermal Decomposition of Citric Acid. *Thermochimica Acta,* 1986, vol. 98, 119-126
- **D. WYRZYKOWSKI et al.** Thermal Behavior of Citric Acid and Isomeric Aconitic Acids. *J. Therm. Anal. Calorim.,* 2001, vol. 104, 731-735